# EUROPEAN PATENT APPLICATION

(11) **EP 2 987 997 A1**
(43) Date of publication of application: **24.02.2016**
(21) Application number: 14784788.3
(22) Date of filing: 06.03.2014
(51) Int. Cl.: F03B 13/00, F03D 9/00, F03B 11/00, F03B 3/00

(54) **AIR-CUSHIONED SMALL HYDRAULIC POWER GENERATING DEVICE**

(30) Priority: 18.04.2013 KR 20130043051
(71) Applicant: Choi, Nam-kyu, Seoul 152-800 (KR); Choi, Ju-young, Seoul 152-800 (KR)
(72) Inventor: Choi, Nam-kyu, Seoul 152-800 (KR); Choi, Ju-young, Seoul 152-800 (KR)
(74) Representative: Louis Pöhlau Lohrentz
(86) International application number: PCT/KR2014/001831
(87) International publication number: WO 2014/171629

(57) **Abstract**

In an air-cushioned small hydraulic power generating device, when a stator in a generator linked by means of an upper rotational shaft to a first vertical-shaft windmill rotates in a first direction, a rotor in the generator linked by means of a lower rotational shaft to a second vertical-shaft windmill and an air-cushioned water wheel rotate in a second direction opposite to the first direction, thereby increasing the rotational force and thus enhancing the power generation efficiency. The generator can be easily installed in valleys, watercourses, rivers, irrigation water channels, or seawater channels without having geographic limitation. Furthermore, since an air-cushioned water wheel is used to support the weight of the generator and rotational shafts, the generator can be easily installed to float on the surface of water. Therefore, breakdown and maintenance cost of the generator can be minimized.

## Description

### [Technical Field]

The present invention relates to an air-cushioned small hydraulic power generating device and, more particularly, to an air-cushioned small hydraulic power generating device that is installed to generate electricity in areas with a water stream, for example, valleys, watercourses, irrigation channels, or sea water channels.

### [Background Art]

Generally, representative electric power generation methods include hydroelectric power generation which uses hydraulic power, thermal power generation which uses fossil fuels, and nuclear power generation which uses nuclear fission.

These methods require a large scale power generation facility and a mass amount of energy to drive equipment in the power generation facility. Moreover, these methods have geographical constraints.

Specifically, since fossil fuels-based thermal power generation much more highly relies on expendable fuels such as oil or coal than other power generation methods and consumes a huge amount of fossil fuels, it will likely cause a problem of an exhaustion of natural resources.

On the other hand, nuclear power generation is not free from the risk of air pollution or radiation leakage. In other words, nuclear power is not ecofriendly. Since fossil fuels that are used to generate electric power are finite, they will be exhausted in the near future.

In other words, thermal power generation has problems - an exhaustion of natural resources due to the use of expendable fuels such as oil or coal and an invitation of global warming attributable to combustion of fossil fuels.

To prevent environmental pollution attributable to an emission of pollutants, power generation methods using natural energy such as solar energy or kinetic energy of tidal power, wave power, wind power, large-scale hydraulic power, or small-scale hydraulic power have been recently developed.

Since power generation methods using natural energy such as solar energy or kinetic energy of tidal energy, wave power, wind power, large-scale hydraulic power, or small-scale hydraulic power are ecofriendly and use reusable energy, these methods have been paid attention recently.

Among these methods, a power generation method of converting solar energy or wind power into electricity and storing the electricity in a storage battery is influenced by weather conditions or environments. Therefore, there are practical constrains in the use of this method.

On the other hand, power generation using tidal power has to be installed in oceans with great tidal variation and high current velocities to generate electricity. Therefore, there is a problem that it can be used in a limited area. That is, it has geographic constraints.

Power generation using wave power has to be installed in areas with continuous waves. Therefore, this power generation also has geographic constraints like tidal power generation.

A power generating device using large-scale hydraulic power has advantages of low operation cost, stable power generation, and semi-permanent use. However, this generator has to be installed in areas with a lake or reservoir that can retain a large amount of water. Therefore, this method also has geographic constraints.

Since a hydraulic power generating device generates electricity by rotating a water wheel using hydraulic pressure, it requires a water storage facility such as a dam, generation facilities installed downstream of a dam, and a drainage facility to discharge water used for power generation to a river or sea.

Furthermore, conventional large-scale hydraulic generators suffer low operation efficiency in a period of water shortage such as a dry season or a drought condition during which the volume of water in a water storage facility is insufficient.

A power generating device using wind power is advantageous in that it is ecofriendly. However, it is difficult to obtain high power generation efficiency with a wind power generating device in areas with weak wind like in Korea.

Power generating devices using wind power or large-scale hydraulic power incur a huge amount of installation cost but are not cost effective.

On the other hand, small hydraulic power generation generally means power generation facility having power generation capacity of less than 15,000 kW. However, a power generation facility having capacity of less than 3,000 KW is classified as small hydraulic power generation in Korea. Small hydraulic power generation is clean power generation that uses clean energy and does not cause environmental pollution. Furthermore, since it has an advantage of high energy density, it is recognized as a promising natural resource.

Small hydraulic power generation is more ecofriendly and requires a shorter period in designing and installing facilities than conventional large hydraulic power generation. Furthermore, its operation cost is low, although its investment cost is high.

### [Disclosure]

### [Technical Problem]

Accordingly, the present invention has been made keeping in mind the above problems occurring in the prior art, and an object of the present invention is to provide an air-cushioned small hydraulic power generating device that is not constrained in installation sites, thereby being capable of installation in valleys, watercourses, rivers, irrigation channels, or sea water channels, and that can generate electricity using the flow of water while not causing damage to an aquatic ecosystem.

Another object of the invention is to provide an air-cushioned small hydraulic power generating device in which an air-cushioned hydraulic water wheel is used to support the weight of a generator so that the generator can be easily to float on the surface of water, making it possible to minimize breakdown and maintenance cost of the generator.

### [Technical Solution]

In order to accomplish the above object, the present invention provides an air-cushioned small hydraulic power generating device including: a generator with an upper rotational shaft and a lower rotational shaft; a first vertical-shaft windmill that is linked to an end of the upper rotational shaft by means of a first coupler to rotate the upper rotational shaft; a second vertical-shaft windmill that is linked to an end of the lower rotational shaft by means of a second coupler to rotate the lower rotational shaft; an air-cushioned water wheel that is vertically linked to a lower portion of the second vertical-shaft windmill by means of the second coupler, thereby being enabled to float on the surface of water and rotated by a resistance of water current while supporting the upper rotational shaft and the lower rotational shaft and being rotated by resistance of a water current; and a water current guiding means that is installed on a wall surface by means of a fixed rail and guides a water current such that the air-cushioned water wheel flows fast in one direction.

According to another embodiment, the upper rotational shaft is linked to a stator which can freely rotate by means of a bearing in a casing of the generator so that the upper rotational shaft and the stator simultaneously rotate, and the lower rotational shaft is linked to a rotor that is installed in a center of the stator in a freely rotatable manner by means of a bearing so that the lower rotational shaft rotates in a direction opposite to the rotation direction of the upper rotational shaft.

According to a further embodiment, the first vertical-shaft windmill may be a Giromill type in which a plurality of blades is installed on a central rotational shaft and individually rotated at different angles by wind.

According to a further embodiment, the second vertical-shaft windmill includes a fixed portion that is in tight contact with the second coupler and a plurality of blades that is fixed at regular intervals along an external circumferential surface of the stator.

According to a further embodiment, a spacing curve portion that is a recessed portion is formed at an inside corner of a lower end of the plurality of blades so as to correspond to an outer edge of an upper end of the air-cushioned water wheel.

According to a further embodiment, the air-cushioned water wheel includes: a liquid storage portion that stores liquid in a body thereof and has an inlet portion at an upper end thereof to adjust a weight thereof; an air storage portion that has a bowl shape with an opening at a lower end of the body, has a predetermined height, and is sealed by water introduced through the opening, thereby adjusting buoyancy to form a compressed air layer; a plurality of blades that protrudes from an outer surface of a lower end portion of the body at regular intervals and rotates the body by receiving resistance of a water current; a convex curve portion that has a rising curve corresponding to the spacing curve portion formed in the blades of the second vertical-shaft windmill and is spaced by a predetermined distance from the spacing curve portion; and a concave curve portion that causes a cloud of water spray generated by water colliding with a portion of the body between the plurality of blades and the convex curve portion to rebound therefrom so that the cloud of water spray does not escape upward.

According to a further embodiment, the plurality of blades is tapered to a lower end so that an upper external diameter of the blades is larger than a lower external diameter of the blades.

According to a further embodiment, the water current guiding means includes: a fixable block that is engaged with a lower end of the fixed rail and can be locked after a height of the fixable block is adjusted; and a guide plate that is fixed to the fixable block such that the guide plate suspends and extends in a horizontal direction, surrounds an outer surface of the blades of the air-cushioned water wheel with a predetermined distance therebetween, and has an inflow portion and an outflow portion that are in a diagonal direction so that a water current winds when passing between the blades.

According to a further embodiment, the guide plate has a chamber portion with a wedge shape in a center portion in a horizontal plane thereof so that the blades of the air-cushioned water wheel can be smoothly inserted into the chamber portion. The inflow portion is formed at a front side of the guide plate and located on a right side with respect to a vertical central line of the body of the air-cushioned water wheel. The outflow portion is formed at a rear side of the guide plate and located on a left side with respect to the vertical central line of the body of the air-cushioned water wheel.

### [Advantageous Effects]

As described above, the air-cushioned small hydraulic power generating device according to the present invention is structured such that when the stator linked to the first vertical-shaft windmill via the upper rotational shaft rotates in one direction, the second vertical-shaft windmill and the rotor in the generator, which is linked to the air-cushioned water wheel via the lower rotational shaft, rotates in a direction opposite to the rotation direction of the stator. This structure enhances rotational force of the stator and rotor, thereby increasing power generation efficiency. Furthermore, the air-cushioned small hydraulic power generating device according to the present invention can be easily installed in many places, for example, valleys, watercourses, rivers, irrigation channels, or sea water channels. Yet furthermore, the air-cushioned small hydraulic power generating device according to the present invention can generate electricity using water current, not causing damage to an aquatic ecosystem. Yet furthermore, since the air-cushioned water wheel is used to support the weight of the generator and rotational shafts, the generator can be easily installed on the surface of water. Therefore, breakdown and maintenance cost of the generator can be minimized.

### [Description of Drawings]

FIG. 1 is an exploded perspective view illustrating an air-cushioned small hydraulic power generating device according to one embodiment of the present invention;
FIG. 2 is a side view illustrating an assembled structure of the air-cushioned small hydraulic power generating device according to one embodiment of the present invention; and
FIG. 3 is a cross-sectional view taken along a line A-A of FIG. 2.

### Explanation of Reference Numerals

- 10:: generator
- 10a:: casing
- 12:: upper rotational shaft
- 12a:: stator
- 14:: lower rotational shaft
- 14a:: rotor
- 16a, 16b:: bearing
- 20:: first coupler
- 22:: second coupler
- 24:: plate
- 26:: bolt
- 28:: nut
- 30:: first vertical-shaft windmill
- 32:: rotational shaft
- 34:: blade
- 40:: second vertical-shaft windmill
- 42:: fixed portion
- 44:: blade
- 44a:: spacing curve portion
- 50:: air-cushioned water wheel
- 51:: body
- 52:: inlet portion
- 53:: liquid storage portion
- 54:: air storage portion
- 55:: blade
- 56:: convex curve portion
- 57:: concave curve portion
- 60:: fixed rail
- 70:: water current guide plate
- 76a:: inflow portion
- 76b:: outflow portion
- 78:: chamber portion

### [Best Mode]

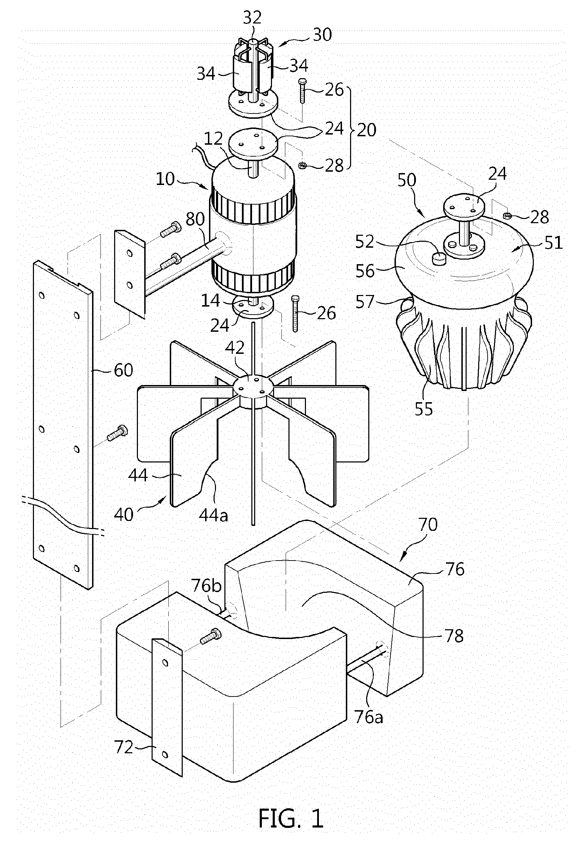

Hereinafter, an embodiment of the present invention will be described below with reference to the accompanying drawings, FIGS. 1 to 3.

As illustrated in FIGS. 1 to 3, an air-cushioned small hydraulic power generating device according to one embodiment of the present invention includes: a generator 10 with an upper rotational shaft 12 and a lower rotational shaft 14; a first vertical-shaft windmill 30 that is linked to an end of the upper rotational shaft 12 by means of a first coupler 20 to rotate the upper rotational shaft 12; a second vertical-shaft windmill 40 that is linked to an end of the lower rotational shaft 14 by means of a second coupler 22 to rotate the lower rotational shaft 14; an air-cushioned water wheel 50 that is vertically linked to a lower portion of the second vertical-shaft windmill 40 by means of the second coupler 22, thereby floating on the surface of water and being rotated by resistance of water current while supporting the upper rotational shaft 12 and the lower rotational shaft 14; and a water current guiding means 70 that is installed on a wall surface by means of a fixed rail 60 and guides a water current such that the air-cushioned water wheel 50 can flow fast in one direction.

The upper rotational shaft 12 is linked to a stator which can freely rotate by means of a bearing 16a in a casing 10a of the generator 10 so that the upper rotational shaft 12 and the stator 12a can simultaneously rotate. The lower rotational shaft 14 is linked to a rotor 14a which is installed in a center of the stator 12a in a freely rotatable manner by means of a bearing 16a so that the lower rotational shaft 14 rotates in a direction opposite to the rotation direction of the upper rotational shaft 12.

The first coupler 20 and the second coupler 22 are in tight contact with and combined with a plate 24 in corresponding positions, respectively by means of a coupling means consisting of a bolt 26 and a nut 28.

The first vertical-shaft windmill 30 may be a Giromill type in which a plurality of blades 34 is installed on a central rotational shaft 32 and individually rotated at different angles by wind.

The second vertical-shaft windmill 40 includes a fixed portion 42 that is in tight contact with the second coupler 22 and a plurality of blades 44 that is fixed at regular intervals along an external circumferential surface of the stator 42.

A spacing curve portion 44a that is a recessed portion is formed in an inside corner of a lower end of the plurality of blades 44 so as to correspond to an outer edge of an upper end of the air-cushioned water wheel 50.

The air-cushioned water wheel 50 includes: a liquid storage portion 53 that stores liquid such as water in a body 51 thereof and has an inlet portion 52 at an upper end thereof to adjust the weight; an air storage portion 54 that has a bowl shape with an opening at a lower end of the body 51, has a predetermined height, and is sealed by water introduced through the opening, thereby adjusting buoyancy to form a compressed air layer (air-cushioning layer); a plurality of blades 55 that protrudes from an outer surface of a lower end portion of the body 51 at regular intervals and rotates the body 51 by receiving resistance of a water current; a convex curve portion 56 that has a rising curve corresponding to the spacing curve portion 44a formed in the blades of the second vertical-shaft windmill 40 and is spaced by a predetermined distance from the spacing curve portion 44a; and a concave curve portion 57 that causes a cloud of water spray generated by water colliding with a portion of the body 51 between the plurality of blades 55 and the convex curve portion 56 to rebound therefrom so that the cloud of water spray does not escape upward.

In this case, the plurality of blades 55 is tapered to a lower end so that an upper external diameter of the blades 55 is larger than a lower external diameter of the blades 55.

The body 51 has the shape of the stem of a ship when it is viewed from the side. That is, a connection line that extends from the convex curve portion 56 to the concave curve shape 57, and to the blades 55 forms the shape of the stem of a ship.

The water current guiding means 70 includes: a fixable block 72 that is engaged with a lower end of the fixed rail 60 and can be locked after a height of the fixable block 72 is adjusted; and a guide plate 76 that is fixed to the fixable block 72 such that the guide plate 76 suspends and extends in a horizontal direction, surrounds an outer surface of the blades 55 of the air-cushioned water wheel 50 with a predetermined distance therebetween, and has an inflow portion 76a and an outflow portion 76b that are in a diagonal direction so that a water current winds when passing between the blades 55.

The guide plate 76 has a chamber portion having a wedge shape in a center portion in a horizontal plane thereof so that the blades 55 of the air-cushioned water wheel 50 can be smoothly inserted into the chamber portion. The inflow portion 76a is formed at a front side of the guide plate 76 and located on a right side with respect to a vertical central line of the body 51 of the air-cushioned water wheel 50. The outflow portion 76b is formed at a rear side of the guide plate 76 and located on a left side with respect to the vertical central line of the body 51 of the air-cushioned water wheel 50.

Reference numeral 80 in the drawings denotes a clamp that adjusts the height of the generator 10 and fixes the generator 10 to the fixed rail 60.

Hereinafter, operation and advantages of the air-cushioned small hydraulic power generating device according to the embodiment of the present invention will be described.

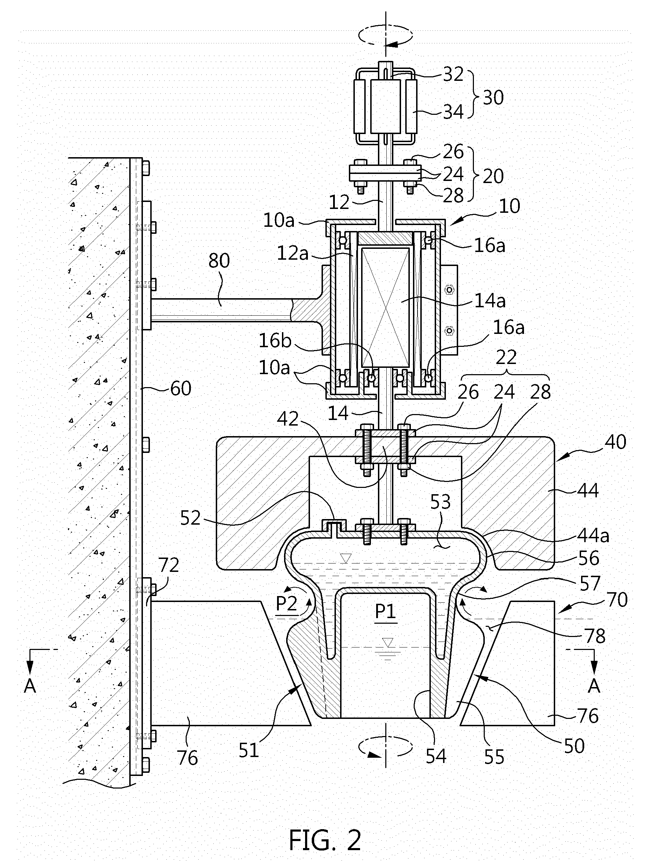

When the air-cushioned small hydraulic power generating device according to the present invention is installed on a wall in an area with a water stream, such as a valley, watercourse, irrigation channel, or sea water channel using the fixed rail 60 and the clamp 80 as illustrated in FIG. 2, the clamp 80 moves up and down along the fixed rail 60 and then fixes the generator 10 to the fixed rail 60 at a predetermined height. In this way, it is possible to prevent the first vertical-shaft windmill 30 linked to the upper rotational shaft of the generator 19, the second vertical-shaft windmill 40 linked to the lower rotational shaft 14 of the generator 10, and the air-cushioned water wheel 50 from being floated away by flowing water and from dropping due to the gravity.

When the air-cushioned water wheel 50 is installed at a height at which the plurality of blades 55 is installed so that the lower half of the air-cushioned water wheel 50 can be submerged in water so as to be in contact with flowing water, the body 51 is floated by buoyancy, thereby supporting the weight of the generator 10, the upper rotational shaft 12, and the lower rotational shaft 14 installed on the body 51. At this point, when the generator is suspended by the fixed rail 60 and the clamp in a cantilever manner, the generator is supported such that its vertical axis is not inclined. Furthermore, the generator 10, the first vertical-shaft windmill 30, the second vertical-shaft windmill 40, and the air-cushioned water wheel 50 are well balanced not to incline but vertically maintained.

That is, when the air-cushioned water wheel 50 is gradually submerged into flowing water while being horizontally well-balanced, water is introduced into the air storage portion 54 disposed at the center of the lower portion of the body 51, thereby sealing the body 51 and compressing air. A compressed air layer P1 confronts buoyancy and forms an air cushioning region which can supports the weight greater than the gravity of the generator which is applied to the body 51. This air cushioning region enables only a portion of the air-cushioned water wheel 50 to be submerged in water and supports the weight of the power generating device such that a vertical axis of the entire body of the power generating device is maintained not to be inclined.

In this case, the amount of liquid such as water stored in the liquid storage portion 53 in the body 51 of the air-cushioned water wheel 50 is controlled to adjust the weight of the air-cushioned water wheel 50. In this way, the height of a submerged portion of the air-cushioned water wheel 50 is controlled.

In addition, as illustrated in FIG. 2, the concave curve portion 57 which is formed at a middle height of the body 51 prevents a cloud of water spray P2 from flying over the convex curve portion 56 when the plurality of blades 55 is submerged and the body 51 is rotated, and returns the cloud of water spray to water.

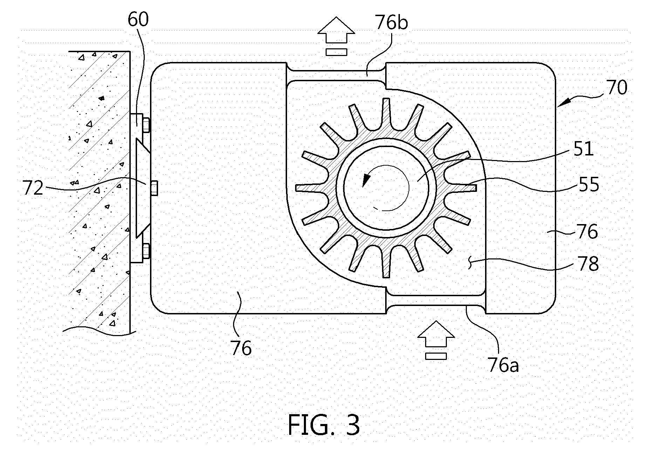

In addition, as illustrated in FIG. 3, the air-cushioned water wheel 50 rotates the rotor 14a via the lower rotational shaft 14 by receiving rotational force of the blades 55, which tend to rotate fast in one direction according to a change in velocity of water current which is introduced in one direction by the water current guiding means, then swirled at a large angle, and finally discharged.

The first vertical-shaft windmill 30 and the second vertical-shaft windmill 40 that are installed on the air-cushioned water wheel can obtain large rotational force even at slow wind speed. Particularly, the second vertical-shaft windmill 40 is installed to be close to the surface of flowing water, rotational force is increased. That is, wind gains its speed on the surface of water because wind blows in a direction rotated clockwise by an angle of 1° to 45° from northwest direction. Therefore, when the blades 44 of the second vertical-shaft windmill 40 are installed to be close to the surface of water, the rotational force of the blades 44 can be increased.

As described above, when the stator 12a in the generator 10 is rotated in one direction by the rotational force of the first vertical-shaft windmill 30, which is transferred via the upper rotational shaft 12, the rotor 14a in the generator 10 is rotated in a direction opposite to the rotation direction of the stator 12a by the rotational force of the second vertical-shaft windmill 40 and the air-cushioned water wheel 50, which is transferred via the lower rotational shaft 14. Accordingly, it is possible to cause a great increase in rotational force even at slow speed of wind or low velocity of water. Power generation efficiency can be dramatically increased.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An air-cushioned small hydraulic power generating device, comprising:
a generator 10 with an upper rotational shaft 12 and a lower rotational shaft 14;
a first vertical-shaft windmill 30 that is linked to an end of the upper rotational shaft 12 by means of a first coupler 20 to rotate the upper rotational shaft 12;
a second vertical-shaft windmill 40 that is linked to an end of the lower rotational shaft 14 by means of a second coupler 22 to rotate the lower rotational shaft 14;
an air-cushioned water wheel 50 that is vertically linked to a lower portion of the second vertical-shaft windmill 40 by means of the second coupler 22, thereby being enabled to float on the surface of water and rotated by a resistance of water current while supporting the upper rotational shaft 12 and the lower rotational shaft 14 and being rotated by resistance of a water current; and
a water current guiding 70 means that is installed on a wall by means of a fixed rail 60 and guides a water current such that the air-cushioned water wheel 50 flows fast in one direction.

2. The air-cushioned small hydraulic power generating device according to claim 1, wherein the upper rotational shaft 12 is linked to a stator 12a that is freely rotatable by means of a bearing 16a in a casing 10a of the generator 10 so that the upper rotational shaft 12 and the stator 12a simultaneously rotate, and the lower rotational shaft 14 is linked to a rotor 14a which is installed in a center of the stator 12a in a freely rotatable manner by means of a bearing 16b so that the lower rotational shaft 14 rotates in a direction opposite to the rotation direction of the upper rotational shaft 12.

3. The air-cushioned small hydraulic power generating device according to claim 1, wherein the first vertical-shaft windmill 30 is a Giromill type in which a plurality of blades 34 is installed on a central rotational shaft 32 and individually rotated at different angles by wind.

4. The air-cushioned small hydraulic power generating device according to claim 1, wherein the second vertical-shaft windmill 40 includes a fixed portion 42 that is in tight contact with the second coupler 22 and a plurality of blades 44 that is fixed at regular intervals along an external circumferential surface.

5. The air-cushioned small hydraulic power generating device according to claim 4, wherein a spacing curve portion 44a that is a recessed portion is formed in an inside corner of a lower end of the plurality of blades 44 so as to correspond to an outer edge of an upper end of the air-cushioned water wheel 50.

6. The air-cushioned small hydraulic power generating device according to claim 1, wherein the air-cushioned water wheel 50 includes:
a liquid storage portion 53 that stores liquid in a body 51 thereof and has an inlet 52 at an upper end thereof to adjust a weight of the generator 10;
an air storage portion 54 that has a bowl shape with an opening at a lower end of the body 51, has a predetermined height, and is sealed by water introduced through the opening, thereby adjusting buoyancy to form a compressed air layer;
a plurality of blades 44 that protrudes from an outer surface of a lower end portion of the body 51 at regular intervals and rotates the body 51 by receiving resistance of a water current;
a convex curve portion 56 that has a rising curve corresponding to the spacing curve portion 44a formed in the blades 44 of the second vertical-shaft windmill 40 and is spaced by a predetermined distance from the spacing curve portion 44a; and
a concave curve portion 57 that causes a cloud of water spray generated by water colliding with a portion of the body 51 between the plurality of blades 44 and the convex curve portion 56 to rebound therefrom so that the cloud of water spray does not escape upward.

7. The air-cushioned small hydraulic power generating device according to claim 6, wherein the plurality of blades 55 is tapered to a lower end such that an upper external diameter of the blades 55 is larger than a lower external diameter of the blades 55.

8. The air-cushioned small hydraulic power generating device according to claim 1, wherein the water current guiding means includes:
a fixable block that is engaged with a lower end of the fixed rail 60 and can be locked after a height of the fixable block is adjusted; and
a guide plate 24 that is fixed to the fixable block such that the guide plate 24 suspends and extends in a horizontal direction, surrounds an outer surface of the blades 55 of the air-cushioned water wheel 50 with a predetermined distance therebetween, and has an inflow portion 76a and an outflow portion 76b that are in a diagonal direction so that a water current winds when passing between the blades 55.

9. The air-cushioned small hydraulic power generating device according to claim 8, wherein the guide plate 24 has a chamber portion 78 with a wedge shape in a center portion in a horizontal plane thereof so that the blades 55 of the air-cushioned water wheel 50 can be smoothly inserted into the chamber portion 78, wherein the inflow portion 76a is formed at a front side of the guide plate 24 and located on a right side with respect to a vertical central line of the body 51 of the air-cushioned water wheel 50, and wherein the outflow portion 76b is formed at a rear side of the guide plate 24 and located on a left side with respect to the vertical central line of the body 51 of the air-cushioned water wheel 50.
